# EUROPÄISCHE PATENTANMELDUNG

(11) **EP 1 178 226 A2**
(43) Veröffentlichungstag der Anmeldung: **06.02.2002**
(21) Anmeldenummer: 01118192.2
(22) Anmeldetag: 27.07.2001
(51) Int. Cl.: F16B 13/12

(54) **Verbindungselement zum Einstecken in vorbereitete Löcher von Wänden oder dergleichen**

(30) Priorität: 03.08.2000 DE 20013366 U
(71) Anmelder: Niemann, Hans-Dieter, D-50169 Kerpen-Horrem (DE)
(72) Erfinder: Niemann, Hans-Dieter, D-50169 Kerpen-Horrem (DE)
(74) Vertreter: Eichler, Peter, Dipl.-Ing.

(57) **Zusammenfassung**

Die Erfindung bezieht sich auf ein Verbindungselement (10) zum Einstecken in vorbereitete Löcher von Wänden oder dergleichen, mit einem hohlen Schaft (13), der zumindest längenabschnittsweise mittels Schrauben, Nägel od. dergl. aufweitbar ist und aus Kunststoff od. dergl. schlecht wärmeleitendem Werkstoff besteht.

Um ein Verbindungselement mit den eingangs genannten Merkmalen wärmetechnisch zu optimieren, wird das Verbindungselement (10) so ausgebildet, daß es nach seinem Einstecken innerhalb eines Loches überall geschlossen ist und nach seinem Aufweiten überall geschlossen bleibt.

## Beschreibung

Die Erfindung bezieht sich auf ein Verbindungselement zum Einstecken in vorbereitete Löcher von Wänden od. dergl., mit einem hohlen Schaft, der zumindest längenabschnittsweise mittels Schrauben, Nägel od. dergl. aufweitbar ist und aus Kunststoff oder dergleichen schlecht wärmeleitendem Werkstoff besteht.

Verbindungselemente mit den vorgenannten Merkmalen sind als Dübel allgemein bekannt. Sie sind geschlitzt und/oder bodenlos. Eingeschraubte Schrauben oder eingeschlagene Nägel spreizen den Schaft und sind in der Regel gleich oder länger als die Einstecklänge des Dübels im Loch der Wand. Hieraus ergibt sich, daß sich die Kälte der Wand auf die metallische Schraube bzw. auf den metallischen Nagel überträgt. Das gilt insbesondere auch dann, wenn das bekannte Verbindungselement in Hohlkammern am Bauwerk eingesetzt wird, z.B. in Hohlkammern von Hohlblocksteinen oder Blendrahmen von Türen oder Fenstern. In solchen Fällen überträgt sich die Kälte aus einem Außenbereich in den Innenbereich. Es entsteht eine Kältebrücke an den Befestigungsstellen, die von aus Kunststoff bestehenden Dübeln bzw. Schäften nicht unterbrochen ist. Infolgedessen kommt es zu Kondenswasserbildung an den Schrauben oder Nägeln im Bereich davon befestigter Bauelemente des warmen Innenraumbereichs. Daher entstehende Schäden sind nicht auszuschließen.

Der Erfindung liegt also die Aufgabe zugrunde, Verbindungselemente mit den eingangs genannten Merkmalen wärmetechnisch zu optimieren.

Die vorgenannte Aufgabe wird dadurch gelöst, daß das Verbindungselement nach seinem Einstecken innerhalb eines Loches überall geschlossen ist und nach seinem Aufweiten überall geschlossen bleibt.

Für die Erfindung ist von Bedeutung, daß das Verbindungselement die Schraube oder den Nagel, also das innerhalb der Wand befestigende Element, von schlecht wärmeleitendem Werkstoff ringsum umkleidet ist. Innerhalb eines Loches ist das Verbindungselement überall geschlossen und auch nach seinem Aufweiten durch ein Einschrauben einer Schraube oder durch eine Einschlagen eines Nagels bleibt das Verbindungselement überall geschlossen. Infolgedessen ist der Wärmeübergang zwischen der Wand und dem aufweitenden metallischen Bauteil behindert. Das Verbindungselement ist wärmetechnisch optimiert, da das Temperaturgefälle aus dem Wandbereich der Schraube bzw. des Nagels zum warmen Innenraumbereich behindert ist. Es wird eine isolierende Wirkung auf das Verbindungselement erzielt.

Das Verbindungselement kann so ausgebildet werden, daß der Schaft aus einem ersten, härteren Werkstoff und einem zweiten, weicheren Werkstoff besteht. Im Falle einer Aufweitung des Schaftes durch Schrauben oder Nägel wird der Schaft zuerst in denjenigen Bereichen aufgeweitet, die aus dem zweiten weicheren Werkstoff bestehen. Der weichere Werkstoff verpreßt sich mit der Wand und dringt insbesondere in deren Hohlräume ein. Infolgedessen ergibt sich ein kraftschlüssiger und/oder ein formschlüssiger Sitz des Verbindungselements in der Wand. Dieser Sitz gewährleistet hinreichend hohe Auszugskräfte, um mit der Schraube bzw. mit dem Nagel Bauteile an der Wand zu befestigen.

Eine zweckmäßige Ausgestaltung eines Verbindungselements liegt vor, wenn sich der erste und der zweite Werkstoff des Schafts längenabschnittsweise abwechseln. Damit lassen sich die Verankerungsstellen des Schafts gleichmäßig über dessen Länge verteilen. Das ist insbesondere dann vorteilhaft, wenn zu erwarten ist, daß im Lochbereich der Wand mehrere über die Lochlänge verteilte Hohlkammern vorhanden sind, in denen sich der weichere Werkstoff verteilen kann.

Eine bezüglich der Längsachse des Schafts rotationssymmetrische Ausbildung wird dadurch erreicht, daß der erste und der zweite Werkstoff geschlossen hülsenförmig ausgebildet sind. Es ist dann nicht erforderlich, daß das Verbindungselement in einer vorbestimmten Drehwinkelstellung in die Wand eingebracht werden muß, um das Haltevermögen des Verbindungselements ggf. zu gewährleisten.

Es ist zu bevorzugen, das Verbindungselement so auszubilden, daß eine Hülse aus dem zweiten Werkstoff einen Innendurchmesser aufweist, der kleiner als der Außendurchmesser aufweitender Schrauben oder Nägel ist. Infogedessen werden in die Hülse eindringende Schrauben oder Nägel den zweiten Werkstoff aufweiten und damit den festen Sitz des Verbindungselements in der Wand bewirken. Die Hülsen ersten Werkstoffs können unbeeinträchtigt bleiben.

Das Verbindungselement kann dahingehend weitergebildet werden, daß eine Hülse aus dem ersten Werkstoff einen Innendurchmesser aufweist, der praktisch gleich dem Außendurchmesser aufweitender Schrauben oder Nägel ist. Es wird erreicht, daß eine aus dem ersten Werkstoff bestehende Hülse von einer Aufweitung mit einer Schraube oder einem Nagel verschont bleibt. Andererseits wird ein Spalt zwischen der Hülse und der Schraube oder dem Nagel vermieden, so daß der aufgeweitete zweite Werkstoff vollständig zum Verpressen an oder in der Wand zur Verfügung steht, um den gewünschten festen Sitz des Verbindungselements zu erreichen.

Eine Weiterbildung des Verbindungselements zeichnet sich dadurch aus, daß eine Hülse aus dem ersten Werkstoff ein Innengewinde hat, in das eine Schraube eingreift. Diese Ausgestaltung verbessert den Sitz einer Schraube im Verbindungselement. Die Schraube ist mit der aus dem ersten Werkstoff bestehenden Hülse formschlüssig verbunden, so daß etwaige Auszugskräfte problemlos auf den Schaft des Verbindungselements übertragen werden. Außerdem wird die Abdichtung zwischen dem Außenumfang der Schraube und dem Innenumfang der Hülse aus festem Werkstoff verbessert.

Es ist von Vorteil, wenn zwei Hülsen aus dem ersten Werkstoff mittels den zweiten Werkstoff durchsetzender Verbindungsstege miteinander verbunden sind. Alle aus festem Werkstoff bestehenden Hülsen sind infolgedessen einstückig miteinander verbunden, was für ihre Herstellung und für ihre Verarbeitung von Vorteil ist. Sie haben beispielsweise automatisch vorbestimmte Relativlagen zueinander, um sie mit dem zweiten, weicheren Werkstoff zusammen zu bringen. Die Hülsen können nicht gegeneinander und nicht in Bezug auf den zweiten Werkstoff verdreht werden.

Eine weitere Optimierung der vorbeschriebenen Ausführungsform ist darin zu sehen, daß die Verbindungsstege zweier Hülsen ersten Werkstoffs radial ausknickbar sind. Es ist infolgedessen möglich, zwei Hülsen ersten Werkstoffs beim Einschrauben einer Schraube relativ zueinander zu bewegen. Das ist beispielsweise dann vorteilhaft, wenn eine erste solche Hülse in bzw. an der Wand festgelegt ist und die zweite Hülse von einer Schraube in vorbestimmtem Umfang in Richtung auf die erste Hülse gezogen wird. Ausknickende Verbindungsstege springen dann radial vor und greifen in Wandhohlkammern ein. Außerdem wird weicherer Werkstoff zwischen zwei Hülsen ersten Werkstoffs zusammengedrückt und damit komprimiert, um den festen Sitz des Verbindungselements im Loch zu verbessern. Das gilt insbesondere auch dann, wenn die Schraube oder der Nagel den weicheren Werkstoff zuvor noch nicht komprimiert hatte, beispielsweise weil der Innendurchmesser des weicheren Werkstoffs gleich oder größer war, als der Außendurchmesser der Schraube oder des Nagels.

Das Verbindungselement kann so ausgebildet werden, daß es eine Endhülse mit geschlossenem Boden aufweist. Es ist daher nicht möglich, daß weicherer Werkstoff aus einem wandseitigen offenen Schaftende hinausgedrückt wird und damit für eine Verankerung des Verbindungselements in der Wand verloren geht.

Es kann von Vorteil sein, das Verbindungselement so auszubilden, daß es eine Schraube oder einen Nagel lochseitig vollkommen umschließt. Infolgedessen braucht das Verbindungselement keine Austrittöffnung der Schraube oder des Nagels abzudichten. Das ist insbesondere der Werkstoffauswahl förderlich, da der Werkstoff nicht im Hinblick auf eine Abdichtungsfunktion optimiert werden muß.

Um das Einschrauben einer Schraube in das Verbindungselement zu erleichtern, insbesondere wenn die Schraube den weicheren Werkstoff verdrängen soll, wird das Verbindungselement zweckmäßigerweise so ausgebildet, daß der Schaft an seinem ersten, härteren Werkstoff Verdrehungen verhindernde Ausleger aufweist. Ein Durchdrehen des Verbindungselement ist dann nicht möglich, auch wenn das Loch mit geringfügig größerem Durchmesser vorbereitet wurde.

Für bestimmte Anwendungsfälle kann die Ausbildung des Verbindungselements dahingehend vorteilhaft sein, daß es mit weiteren Verbindungselementen über vorbestimmte Abstände gewährleistende Abstandsstege verbunden ist. Es kann eine Kette oder ein Feld von Verbindungselementen ausgebildet werden. Solche Ketten oder Felder können insgesamt angewendet werden, also bei genau definierten Abständen der Verschraubungspunkte in die vorbereiteten Löcher eingeschoben werden, z.B. maschinell. Das gilt beispielsweise für mit Bohrlehren hergestellte Löcher, wie sie an Türen oder Fenstern für die Befestigung von Rahmenbändern und Flügelbändern eingesetzt werden.

Vorteilhaft ist es, ein Verbindungselement so zu gestalten, daß es mittels Zweikammerspritzguß hergestellt ist. Das Prinzip des Zweikammerspritzgusses ist insbesondere für das nacheinander erfolgende Herstellen von Schaftteilen aus härterem Werkstoff einerseits und weicherem Werkstoff andererseits geeignet. Bei dem Zweikammerspritzguß wird zuerst der Werkstoff der härteren Teile des Verbindungselements in das Werkstück eingespritzt. Danach wird das Werkzeug in der Spritzgießmaschine gedreht und durch einen zweiten Anguß dieses Werkzeugs wird der Werkstoff für die weicheren Teile des Verbindungselements eingespritzt. Danach kann das fertige Verbindungselement aus dem Werkzeug herausgebracht werden.

Das Verbindungselement kann so ausgebildet werden, daß im Schaft an die Schraube oder an den Nagel angrenzende Be- oder Entlüftungskanäle ausgebildet sind. Die Be- oder Entlüftungskanäle können für einen Luftaustausch sorgen, um so zu verhindern, daß beispielsweise durch Dampfdiffusion an der Schraube oder an dem Nagel entstehende Feuchtigkeit dauerhaft vorhanden bleibt.

Für die vorbeschriebene Ausgestaltung des Verbindungselements ist es zu bevorzugen, wenn wenigstens an Be- oder Entlüftungskanäle an einen in einem Flansch radial ausgebildeten Luftkanal anschließt und/oder daß Be- oder Entlüftungskanäle bodenseitig strömungsmäßig miteinander verbunden sind. Damit wird auch im Falle der Ausgestaltung eines Verbindungselements mit einem Flansch dafür gesorgt, daß die erwünschte Be- oder Entlüftung stattfinden kann. Für eine verbesserte Luftzirkulation wird dadurch gesorgt, daß die Be- oder Entlüftungskanäle bodenseitig strömungsmäßig miteinander verbunden sind.

Die Erfindung wird anhand eines in der Zeichnung dargestellten Ausführungsbeispiels erläutert. Es zeigt:
- Fig.1: einen Längsschnitt durch ein Verbindungselement,
- Fig.1a: den Querschnitt I-I der Fig.1,
- Fig.2: einen Längsschnitt durch ein in einer Wand eingesetztes Verbindungselement mit an der Wand befestigtem Bauteil,
- Fig.3: einen dem Längsschnitt der Fig.1 ähnlichen Längsschnitt mit im Schaft ausgebildeten Be- oder Entlüftungskanälen, und
- Fig.4: eine Ansicht des Verbindungselements der Fig.3 in Richtung A.

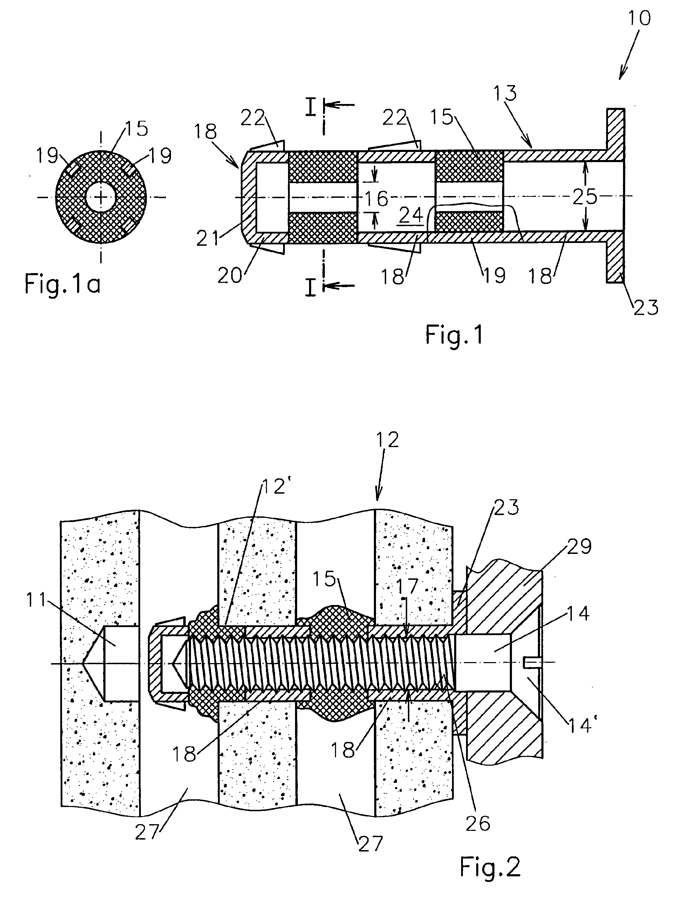

Das Verbindungselement 10 hat einen länglichen hohlen Schaft 13. Dieser Schaft 13 besteht aus unterschiedlichen Längenabschnitten, nämlich aus Hülsen 18 ersten, härteren Werkstoffs und Hülsen 15 aus Werkstoff zweiten, weicheren Werkstoffs. Die dargestellten Hülsen 18 sind alle unterschiedlich ausgebildet. Die in Fig.1 rechte Hülse 18 ist mit einem Ringflansch 23 versehen. Die mittlere Hülse 18 ist zylindrisch und die linke Hülse 18 ist eine Endhülse 20 mit geschlossenem Boden 21. Der Boden 21 sperrt einen Schaftinnenraum 24 wandseitig ab. Dieser Schaftinnenraum 24 hat in allen Hülsen 18 denselben kreisförmigen Querschnitt gleichen Durchmessers. Dieser Innendurchmesser 25 ist abgestimmt auf eine Schraube, die in das Verbindungselement 10 hineingeschraubt wird, oder auf einen Nagel, der in das Verbindungselement 10 hineingeschlagen wird. Fig.2 zeigt in spezieller Ausbildung der beiden einsteckseitigen Hülsen 18 eine Ausgestaltung mit Innengewinde 26, um in dieses eine Schraube 14 eingreifen zu lassen. In beiden Fällen ist der Außendurchmesser der Schraube 14 an den Innendurchmesser der Hülsen 18 angepaßt.

Die Hülsen 18 sind miteinander durch Verbindungsstege 19 verbunden, so daß sie insgesamt als ein Teil anzusehen sind, das aus demselben Werkstoff besteht. Die Verbindungsstege 19 sind vergleichsweise schmal und dünn, so daß sie trotz des härteren Werkstoffs radial ausknickbar sind.

Am Außenumfang der beiden bodenseitigen Hülsen 18 befinden sich leistenartige Ausleger 22. Sie sind bodenseitig flach und weiterhin fern vom Boden 21 mit größerem radialen Vorsprung ausgebildet, so daß sie ohne übermäßige Druckkräfte in ein Loch einer Wand eingesteckt werden können. Die dabei auf die Hülsen 18 einwirkenden Kräfte können die Verbindungsstege 19 nicht zerstören. Die Ausleger 22 verhindern ein Verdrehen des Verbindungselements 10 in einer Wand 12 beispielsweise dann, wenn eine Schraube 14 eingedreht wird.

In Fig.1 sind Hülsen 15 zweiten, weicheren Werkstoffs als Bestandteil des Schafts 13 dargestellt. Sie befinden sich jeweils zwischen zwei Hülsen 18, so daß diese und die Hülsen 15 abwechselnd über die Länge des Schafts angeordnet sind. Jede Hülse 15 weicheren Werkstoffs hat einen Innendurchmesser 16, der kleiner ist, als der Innendurchmesser 25 einer Hülse 18. Ein in dieses Verbindungselement 10 einzubringender Nagel oder eine gemäß Fig.2 eingebrachte Schraube 14 verdrängt bei einem Einbringen den weicheren Werkstoff radial nach außen und/oder komprimiert ihn. Das Verbindungselement 10 wird entsprechend verformt. Die sich ergebenden Verformungen sind aus Fig.2 ersichtlich. Insbesondere ist zu ersehen, daß die verformten Hülsen 15 bzw. deren weicher Werkstoff nicht in den Innenraum 24 der Hülsen 18 gelangt, sondern radial nach außen gegen die Wand bzw. in Hohlkammern 27 der Wand 12 verdrängt wird. Es ergibt sich eine beliebige Ausbildung der Masse der Hülsen 15, bedingt durch die Ausbildung und Anordnung der Hohlkammern 27 der Wand 12. Die dargestellte Formgebung ist nur beispielsweise. Sie zeigt im rechten Bereich, daß dort der weichere Werkstoff weitgehend in der Hohlkammer 27 angeordnet ist, während der Werkstoff im linken Bereich nur zum Teil in eine solche Hohlkammer gelangen konnte und im übrigen gegen Wandabschnitte 12' gepreßt ist, wo er zum festen Sitz des Verbindungselements 10 kraftschlüssig beiträgt.

Ein Vergleich der Länge der unverformten mittleren Hülse 18 der Fig.1 mit der Weite der Hohlkammer 27 zeigt, daß sich auch der härtere erste Werkstoff der Hülse 18 verformt hat, was die Darstellung der Fig.2 aber nicht wiedergibt. Maßgeblich ist, daß der weichere Werkstoff der zweiten Hülsen 15 für alle Verformungsfälle eine Abdichtung des Innenraums 24 des Schafts 13 bzw. der Hülsen 18 bildet. Infolgedessen ist gewährleistet, daß das Verbindungselement ringsum innerhalb des Lochs 11 überall geschlossen ist, und zwar auch nach seinem Aufweiten durch die Schraube 14. Infolgedessen kann ein Bauteil 29 in herkömmlicher Weise an der Wand befestigt werden, beispielsweise mit einem Schraubenkopf 14' oder sonst wie. Aus der Wand stammende Kälte kann nicht über die Schraube 14 zum Schraubenkopf 14' gelangen und dort zu einer mit Tauwasserbildung verbundenen Schädigung des Bauteils 29 führen. Die Schraube 14 ist vom Verbindungselement 10 vollkommen umschlossen. Sie durchdringt nicht den Boden 21 und ist infolge der Ausbildung des Verbindungselements 10 aus schlecht wärmeleitendem Werkstoff wärmeleitungsmäßig abgeschirmt. Das Verbindungselement 10 ist so wärmetechnisch optimiert und entspricht damit auch strengen Anforderungen maßgeblicher Wärmeschutzverordnungen.

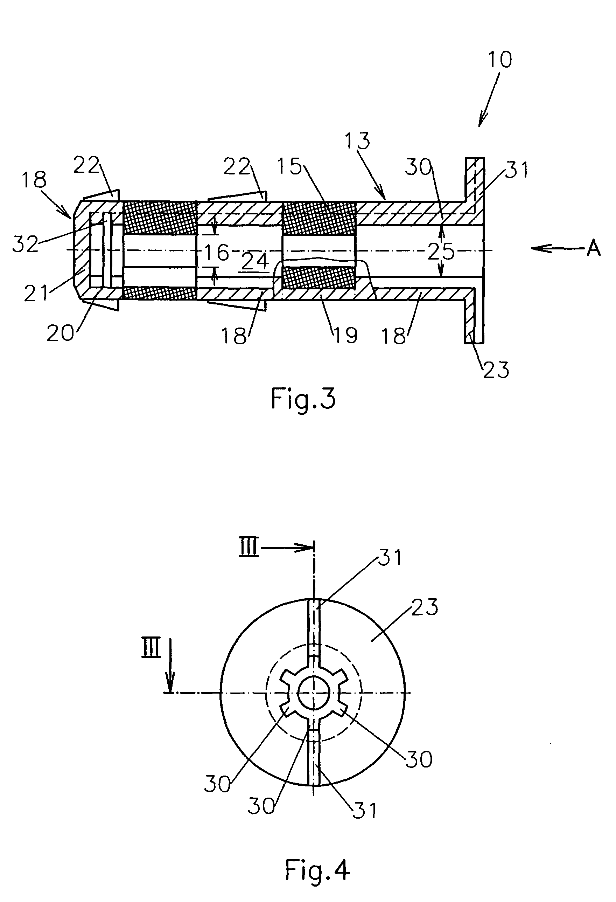

Das in Fig.3 dargestellte Verbindungselement unterscheidet sich von dem der Fig.1 im wesentlichen nur durch zusätzliche Be- oder Entlüftungsmittel. Diese Mittel sind achsparallele Kanäle, die über die gesamte Länge des Schaftinnenraums 24 durchlaufen. Sie sind gemäß Fig.4 gleichmäßig um den Umfang des Schafts 13 verteilt und münden flanschseitig. Bezüglich des Flansches 23 ist dargestellt, daß dieser Luftkanäle 31 aufweist. Die Luftkanäle sind im Flansch radial ausgebildet, verbinden also den Schaftinnenraum 24 mit der Umgebungsluft, wenn das Bauteil 29 gemäß Fig.2 verbunden ist. Jeder Luftkanal 31 steht mit einem der Be- oder Entlüftungskanäle 30 in strömungsmäßiger Verbindung. Zweckmäßigerweise sind alle Kanäle 30 mit mindestens einem Luftkanal 31 strömungsmäßig verbunden.

Fig.3 zeigt, daß die Be- oder Entlüftungskanäle 30 miteinander verbunden sein können. Es ist ein Verbindungskanal 32 dargestellt. Dieser Verbindungskanal 32 verbindet alle Be- oder Entlüftungskanäle 30 so, daß eine Außenluftverbindung auch für solche Kanäle 30 vorhanden ist, die nicht gemäß Fig.4 direkt an einen Luftkanal 31 angeschlossen ist. Es versteht sich, daß das Verbindungselement im Bereich des zweiten, weicheren Werkstoffs so ausgebildet sein muß, daß dessen Zusammenpressen nicht zu einem Verschluß der Be- oder Entlüftungskanäle 30 führt. Hierzu ist in Fig.3 links unten angedeutet, daß der unkomprimierte Bereich des im weicheren Werkstoff gelegenen Abschnitts des Be- oder Entlüftungskanals 30 großräumiger ausgebildet ist, so daß eine Kompression des weicheren Werkstoffs durch einen Nagel oder eine Schraube den Kanal 30 nicht verschließt.

## Patentansprüche

1. Verbindungselement (10) zum Einstecken in vorbereitete Löcher (11) von Wänden (12) oder dergleichen, mit einem hohlen Schaft (13), der zumindest längenabschnittsweise mittels Schrauben (14), Nägel od. dergl. aufweitbar ist und aus Kunststoff od. dergl. schlecht wärmeleitendem Werkstoff besteht, **dadurch gekennzeichnet, daß** das Verbindungselement (10) nach seinem Einstecken innerhalb eines Loches (11) überall geschlossen ist und nach seinem Aufweiten überall geschlossen bleibt.

2. Verbindungselement nach Anspruch 1, **dadurch gekennzeichnet, daß** der Schaft (13) aus einem ersten, härteren Werkstoff und einem zweiten, weicheren Werkstoff besteht.

3. Verbindungselement nach Anspruch 1 oder 2, **dadurch gekennzeichnet, daß** sich der erste und der zweite Werkstoff des Schafts (13) längenabschnittsweise abwechseln.

4. Verbindungselement nach einem oder mehreren der Ansprüche 1 bis 3, **dadurch gekennzeichnet, daß** der erste und der zweite Werkstoff geschlossen hülsenförmig ausgebildet sind.

5. Verbindungselement nach einem oder mehreren der Ansprüche 1 bis 4, **dadurch gekennzeichnet, daß** eine Hülse (15) aus dem zweiten Werkstoff einen Innendurchmesser (16) aufweist, der kleiner als der Außendurchmesser (17) aufweitender Schrauben (14) oder Nägel ist.

6. Verbindungselement nach einem oder mehreren der Ansprüche 1 bis 5, **dadurch gekennzeichnet, daß** eine Hülse (18) aus dem ersten Werkstoff einen Innendurchmesser (25) aufweist, der praktisch gleich dem Außendurchmesser (17) aufweitender Schrauben (14) oder Nägel ist.

7. Verbindungselement nach einem oder mehreren der Ansprüche 1 bis 6, **dadurch gekennzeichnet, daß** eine Hülse (18) aus dem ersten Werkstoff ein Innengewinde (26) hat, in das eine Schraube (14) eingreift.

8. Verbindungselement nach einem oder mehreren der Ansprüche 1 bis 7, **dadurch gekennzeichnet, daß** zwei Hülsen (18) aus dem ersten Werkstoff mittels den zweiten Werkstoff durchsetzender Verbindungsstege (19) miteinander verbunden sind.

9. Verbindungselement nach einem oder mehreren der Ansprüche 1 bis 8, **dadurch gekennzeichnet, daß** die Verbindungsstege (19) zweier Hülsen (18) ersten Werkstoffs radial ausknickbar sind.

10. Verbindungselement nach einem oder mehreren der Ansprüche 1 bis 9, **dadurch gekennzeichnet, daß** es eine Endhülse (20) mit geschlossenem Boden (21) aufweist.

11. Verbindungselement nach einem oder mehreren der Ansprüche 1 bis 10, **dadurch gekennzeichnet, daß** es eine Schraube (14) oder einen Nagel lochseitig vollkommen umschließt.

12. Verbindungselement nach einem oder mehreren der Ansprüche 1 bis 11, **dadurch gekennzeichnet, daß** der Schaft (13) an seinem ersten, härteren Werkstoff Verdrehungen verhindernde Ausleger (22) aufweist.

13. Verbindungselement nach einem oder mehreren der Ansprüche 1 bis 12, **dadurch gekennzeichnet, daß** es mit weiteren Verbindungselementen über vorbestimmte Abstände gewährleistende Abstandsstege verbunden ist.

14. Verbindungselement nach einem oder mehreren der Ansprüche 1 bis 13, **dadurch gekennzeichnet, daß** es mittels Zweikammerspritzguß hergestellt ist.

15. Verbindungselement nach einem oder mehreren der Ansprüche 1 bis 14, **dadurch gekennzeichnet, daß** im Schaft an die Schraube oder an den Nagel angrenzende Be- oder Entlüftungskanäle (30) ausgebildet sind.

16. Verbindungselement nach einem oder mehreren der Ansprüche 1 bis 15, **dadurch gekennzeichnet, daß** wenigstens an Be- oder Entlüftungskanäle (30) an einen in einem Flansch radial ausgebildeten Luftkanal (31) anschließt und/oder daß Be- oder Entlüftungskanäle (30) bodenseitig strömungsmäßig miteinander verbunden sind.
